## Europäisches Patentamt
## European Patent Office
## Office européen des brevets

(19)

(11) Veröffentlichungsnummer: **0 031 594**
**B1**

(12) **EUROPÄISCHE PATENTSCHRIFT**

(45) Veröffentlichungstag der Patentschrift:
**10.08.83**

(21) Anmeldenummer: **80108227.2**

(22) Anmeldetag: **27.12.80**

(51) Int. Cl.³: **H 02 H 7/26**, H 02 H 9/06,
H 02 J 3/36

(54) **Hochspannungs-Gleichstrom-Übertragungsanlage.**

(30) Priorität: **28.12.79 SE 7910716**

(43) Veröffentlichungstag der Anmeldung:
**08.07.81 Patentblatt 81/27**

(45) Bekanntmachung des Hinweises auf die Patenterteilung:
**10.08.83 Patentblatt 83/32**

(84) Benannte Vertragsstaaten:
**CH DE FR GB LI**

(56) Entgegenhaltungen:
**CH-A-389 760**
**DE-A-2 045 703**
**DE-B-1 538 118**
**IEEE TRANSACTIONS ON POWER APPARATUS AND SYSTEMS, Band PAS-98, Nr. 5 September-Oktober 1979 NEW YORK (US) G.D. BREUER et al. (IEEE Working Group): «Insulation Coordination Designs of HVDC Converter Installations», Seiten 1761 bis 1775**

(73) Patentinhaber: **ASEA AB, S-721 83 Västeras (SE)**

(72) Erfinder: **Knudsen, Lars, Dipl.-Ing., Päronstigen 4, S-77100 Ludvika (SE)**

(74) Vertreter: **Boecker, Joachim, Dr.-Ing., Rathenauplatz 2-8, D-6000 Frankfurt a.M. 1 (DE)**

ACTORUM AG

## Hochspannungs-Gleichstrom-Übertragungsanlage

Die vorliegende Erfindung betrifft eine Hochspannungs-Gleichstrom-Übertragungsanlage gemäss dem Oberbegriff des Anspruches 1.

Eine solche Übertragungsanlage enthält häufig ein Gleichstromkabel. Bei den bekannten Übertragungsanlagen dieser Art sind die spannungsbegrenzenden Anordnungen in der Weise ausgebildet, dass sie für beide möglichen Polaritäten der Leitungsspannung das gleiche Begrenzungsniveau haben. Die Übertragungsspannung der Übertragungsleitung wird dabei durch die elektrische Feldstärkebeanspruchung der Kabelisolation beim Auftreten von transienten Überspannungen begrenzt.

Der Erfindung liegt die Aufgabe zugrunde, eine Übertragungsanlage der eingangs genannten Art zu entwickeln, die bei gleicher maximaler Feldstärkebeanspruchung der Leitungsisolation mit einer höheren Betriebsspannung betrieben werden kann als die bekannten Übertragungsanlagen. Ferner soll durch die Erfindung eine kurzzeitige Polaritätsumkehr der Übertragungsspannung ermöglicht werden, um beispielsweise eine schnelle und sichere Löschung eines Lichtbogens bei einem Leitungsfehler zu erzielen oder um die Richtung der übertragenen Leistung bei bestimmten Fehlern schnell umkehren zu können.

Zur Lösung dieser Aufgabe wird eine Hochspannungs-Gleichstrom-Übertragungsanlage gemäss dem Oberbegriff des Anspruches 1 vorgeschlagen, die erfindungsgemäss die im kennzeichnenden Teil des Anspruches 1 genannten Merkmale hat.

Vorteilhafte Weiterbildungen der Erfindung sind in den abhängigen Ansprüchen genannt.

Anhand der in den Figuren gezeigten Ausführungsbeispiele soll die Erfindung näher erläutert werden. Es zeigen

Figur 1 eine Hochspannungs-Gleichstrom-Übertragungsanlage gemäss der Erfindung,

Figur 2 den Verlauf der in einer Kabelisolation auftretenden Feldstärken für unterschiedliche Betriebsfälle,

Figur 3–5 Beispiele für die Ausbildung der bei der Erfindung verwendeten spannungsbegrenzenden Anordnungen.

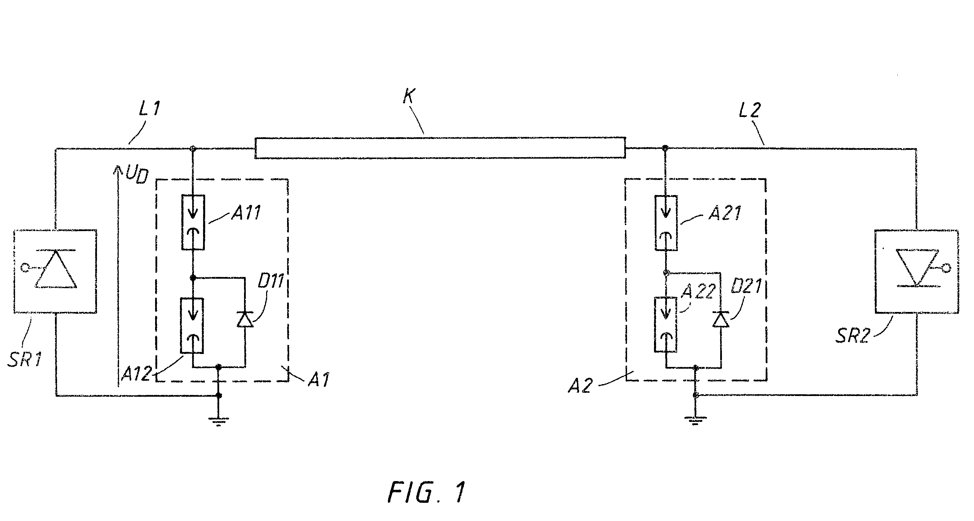

Figur 1 zeigt eine Hochspannungs-Gleichstrom-Übertragungsanlage mit zwei Stromrichterstationen SR 1 und SR 2, welche über eine Gleichstromleitung, die aus den Freileitungen L1 und L2 und einem Gleichstromkabel K besteht, miteinander verbunden sind. An den beiden Enden des Kabels sind spannungsbegrenzende Begrenzungsanordnungen A1 und A2 angeordnet, um die Amplitude der Überspannungen, beispielsweise beim Übergang einer Blitzüberspannung von einer der Freileitungen in das Kabel, auf einen vorgegebenen Wert (das Schutzniveau der Begrenzungsanordnung) zu begrenzen. Die Begrenzungsanordnung A1 besteht aus zwei in Reihe geschalteten Ventilableitern A11 und A12, die zwischen der Leitung und Erde angeschlossen sind. Parallel zum Ventilableiter A12 liegt ein Diodenventil D11, das aus mehreren in Reihe geschalteten Halbleiterdioden bestehen kann. In gleicher Weise ist die Begrenzungsanordnung A2 aus den beiden Ventilableitern A21 und A22 und dem Diodenventil D21 aufgebaut.

In dem Ausführungsbeispiel nach Figur 1 arbeitet die Übertragungsanlage bei Normalbetrieb mit positiver Polarität der Leitung gegenüber Erde, d.h. die Spannung $U_D$ in Figur 1 ist positiv. Bei Überspannungen, welche dieselbe Polarität (positiv) haben wie die Normalbetriebsspannung, werden die Diodenventile D11 und D21 in Sperrichtung beaufschlagt, und das Schutzniveau der Begrenzungsanordnungen ist gleich der Summe der Schutzniveaus der in Reihe geschalteten beiden Ventilableiter. Bei Überspannungen mit einer Polarität (negativ), welche der Polarität der Normalbetriebsspannung entgegengesetzt ist, werden die Dioden D11 und D21 in Durchlassrichtung beaufschlagt, so dass das Schutzniveau der Begrenzungsanordnungen bei dieser Polarität gleich dem Schutzniveau des Ableiters A11 bzw. A21 ist.

Überspannungen von gleicher Polarität wie die der Betriebsspannung bei Normalbetrieb werden also auf einen höheren Wert begrenzt, und Überspannungen von entgegengesetzter Polarität werden auf einen niedrigeren Wert begrenzt. Für die Schutzniveaus für die beiden Polaritäten kann man die gewünschten Werte durch geeignete Wahl der Ansprechniveaus der Ableiter bestimmen.

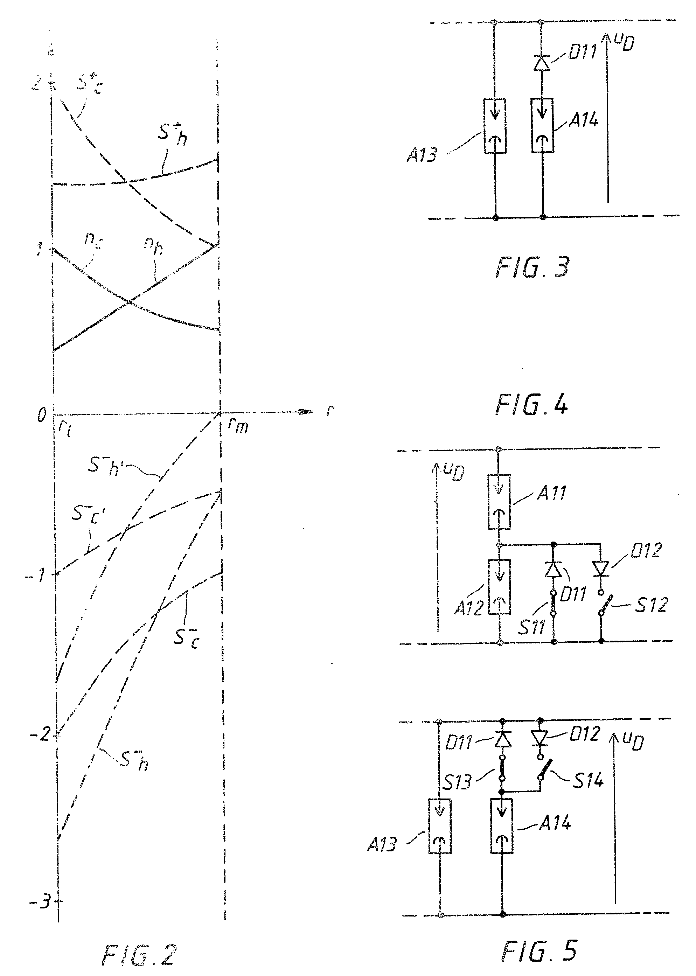

Figur 2 zeigt die Feldstärke E in einem typischen Gleichstromkabel (mit festem Isolationsmaterial) als Funktion des Abstandes r von der Mitte des Kabels. Der Radius des Leiters ist mir $r_1$ und der Innenradius des Mantels mit $r_m$ bezeichnet. Die Feldstärke E=1 ist die Feldstärke, die unmittelbar am Leiter bei kaltem Kabel und bei Betrieb mit der Nennspannung der Übertragung auftritt.

Das elektrische Feld in der Isolation zwischen Leiter und Mantel verteilt sich auf zwei Arten, die von der Art der Spannung abhängig sind, die das Feld erzeugt. Diese sind:

1. Die von der Betriebsspannung erzeugte Feldstärkeverteilung.

2. Die von transienten überlagerten Spannungen erzeugte Feldstärkeverteilung.

Im letztgenannten Falle verteilt sich die Spannung wegen ihrer kurzen Zeitdauer rein kapazitiv im Isolationsmaterial, was bedeutet, dass die Feldstärke umgekehrt proportional mit dem Abstand vom Mittelpunkt des Leiters abnimmt.

Bei dem von der Betriebsspannung erzeugten Feld gehorcht die Feldstärke dagegen einer anderen Gesetzmässigkeit. Eine Gleichspannung verteilt sich im stationären Zustand rein resistiv im Isolationsmaterial, d.h. entsprechend der Verteilung des ohmschen Widerstandes des Isolationsmaterials zwischen Leiter und Mantel. Bei der zylindrischen Form stimmt die resistive Spannungsverteilung zwischen Leiter und Mantel mit der kapazitiven überein, wenn die Resistivität, also der spezifische ohmsche Widerstand, in allen Punkten des Isoliermaterials gleich gross ist. Dies ist der Fall unmittelbar nachdem ein kaltes Kabel an Spannung gelegt wird. Die Feldstärkeverteilung eines solchen kalten Kabels, das an der Nennspannung liegt, geht aus der Kurve $n_c$ in Figur 2 hervor.

Allerdings ist die Resistivität nicht konstant, sondern hängt in erster Linie von der Temperatur und zum anderen auch von der elektrischen Feldstärke ab. Bei Betrieb mit erwärmtem Leiter (d.h. $I_d>0$) entsteht zwischen Leiter und Mantel ein negativer Temperaturgradient, wodurch die Resistivität hinsichtlich des Abstandes vom Mittelpunkt des Leiters eine positive Ableitung bekommt. Dies hat zur Folge, dass die von der Betriebsspannung erzeugte stationäre Spannungsverteilung von der Grösse des Laststroms abhängig ist. Bei niedriger Belastung stimmt die Verteilung nahezu mit der rein kapazitiven Verteilung überein, während bei voller Ausnutzung des Kabels hinsichtlich seiner Strombelastbarkeit die Verteilung mit der maximalen Feldstärke am Mantel sich umkehrt. Ein typisches Kabel erreicht seine stationäre Temperaturverteilung nach einigen Stunden oder Tagen. Die Feldstärkenverteilung bei Nennbelastung und Nennspannung im stationären Zustand wird durch die Kurve $n_h$ in Figur 2 dargestellt. Ein Kabel wird normalerweise so bemessen, dass man bei der Nennspannung dieselbe oder ungefähr dieselbe maximale Feldstärke sowohl bei kaltem (Kurve $n_c$) wie warmem (Kurve $n_h$) Kabel erhält.

Wenn eine der Betriebsspannung überlagerte Spannungstransiente auftritt, verteilt sich die Transientenspannung (Unterschied zwischen der Gesamtspannung und der Betriebsspannung) kapazitiv zwischen Leiter und Mantel, völlig unabhängig von dem bereits vorhandenen von der Betriebsspannung erzeugten Feld. Das resultierende Feld erhält man durch Überlagerung der beiden voneinander unabhängigen Felder.

Im weiteren wird zunächst angenommen, dass das Schutzniveau in beiden Richtungen für die Begrenzungsanordnungen (A1 und A2 in Fig. 1) für beide Polaritäten gleich ist und dass das Kabel mit Nennspannung arbeitet. Es wird ferner angenommen, dass das Schutzniveau der doppelten Nennspannung entspricht.

Eine positive Spannungstransiente – also eine solche mit gleicher Polarität wie die Betriebsspannung – verursacht maximal ein zusätzliches elektrisches Feld von gleicher Grösse und gleicher Verteilung wie das Betriebsspannungsfeld bei kaltem Kabel (Kuve $n_c$ in Fig. 2). Dieses Feldbild addiert sich zum Betriebsspannungsfeld. Der Feldstärkeverlauf des resultierenden Feldes wird in Fig. 2 durch die Kurve $S_c^+$ für das kalte Kabel und die Kurve $S_h^+$ für das warme Kabel dargestellt. Eine negative Transiente kann dagegen maximal eine Amplitude erreichen, die dreimal so gross wie die Nennspannung ist, und kann eine negative Feldstärkekomponente erzeugen, deren Verteilung dasselbe Aussehen wie die Kurve $n_n$ jedoch mit der dreifachen Amplitude hat. Die resultierende Feldstärkeverteilung erhält man, wenn man diese (negative) Komponente zu der betriebsspannungsbedingten Komponente addiert. Die resultierende Felstärkeverteilung für das kalte Kabel zeigt die Kurve $S_c^-$ und für das warme Kabel die Kruve $S_h^-$. Wie hieraus hervorgeht, wird die maximale Feldstärke bei warmem Kabel erheblich grösser als die maximale Feldstärke bei positiver Transiente und kaltem Kabel. Die Felstärke bei negativer Transiente und warmem Kabel ist also für die Bemessung bestimmend. Das hier Gesagte gilt für bereits bekannte Übertragungsanlagen.

Bei einer Übertragungsanlage gemäss der Erfindung ist das Schutzniveau indessen für Überspannungen mit entgegengesetzter Polarität gegenüber der normalen Betriebsspannung niedriger. Es wird nun angenommen, dass das Schutzniveau bei der Übertragungsanlage nach der Erfindung für positive Polarität genauso gross ist wie im obigen Beispiel, nämlich gleich der doppelten Betriebsspannung, dass es jedoch für negative Polarität nur halb so gross ist, nämlich gleich der Betriebsspannung.

Für transiente Überspannungen mit positiver Polarität werden die Verhältnisse dann dieselben wie oben beschrieben; es gilt die Kurve $S_c^+$ für das kalte und die Kurve $S_h^+$ für das warme Kabel. Eine Überspannung mit negativer Polarität kann dagegen maximal eine Feldstärkekomponente von der doppelten Grösse der Kurve $n_c$ in Fig. 2 erzeugen. Die Summe dieser negativen Komponente und der von der Betriebsspannung erzeugten Komponente ergibt die resultierende Feldstärkeverteilung, die für das kalte Kabel durch die Kurve $S_c^-$, und für das warme Kabel $S_h^-$, beschrieben wird. In beiden Fällen ist die maximale Feldstärke kleiner als die maximale Feldstärke, die bei kaltem Kabel und positiver Transiente auftritt. Bei der Bemessung des Kabels brauchen also nur Transientenspannungen mit derselben Polarität wie die der Betriebsspannung beachtet zu werden, was bedeutet, dass das Kabel für eine niedrigere maximale Feldstärke bemessen werden kann als dies bisher möglich war. Entsprechend kann ein gegebenes Kabel mit höherer Spannung betrieben werden als das bisher möglich war.

Figur 3 zeigt eine alternative Ausführung einer der spannungsbegrenzenden Anordnungen nach Figur 1. Ein erster Ventilableiter A13 ist zwischen Leitung und Erde angeschlossen und hat ein Schutzniveau, das Transienten mit derselben Polarität wie die der Betriebsspannung angepasst ist. Ein zweiter Ventilableiter A14 hat ein niedrigeres Schutzniveau und ist in Reihe mit einem Diodenventil D11 an die Leitung angeschlossen. Dieser Ventilableiter A14 kann daher nur ansprechen bei Transienten, deren Polarität der der Betriebsspannung entgegengesetzt ist (von der Betriebsspannung wird angenommen, dass ihre Polarität positiv gegenüber Erde ist).

Es ist häufig erwünscht, die Polarität der Betriebsspannung der Übertragungsleitung gegenüber Erde ändern zu können. Manchmal möchte man diese Polaritätsumkehr nur für eine kurze Zeitspanne, beispielsweise bei einer Notleistungsumkehr oder zum Löschen eines Kurzschlusslichtbogens. Dies ist bei der Übertragungsanlage gemäss Fig. 1 und Fig. 3 im Prinzip möglich, wenn auch mit einer auf das niedrigere Schutzniveau für negative Polarität begrenzten Spannung.

Für einen länger andauernden Polaritätswechsel werden die spannungsbegrenzenden Anordnungen zweckmässigerweise umschaltbar aufgebaut. Die Begrenzungsanordnung A1 gemäss Figur 1 kann in der Weise umschaltbar gemacht werden, dass gemäss Figur 4 ein Schalter S11 in Reihe mit dem Diodenventil D11 vorgesehen wird und dass ein zweites Diodenventil D12 mit entgegengesetzter Durchlassrichtung in Reihe mit einem zweiten Schalter S12 parallel zum Ventilableiter A12 angeordnet wird. Bei Betrieb mit positiver Betriebsspannung $U_D$ ist der Schalter S11 geschlossen und der Schalter S12 geöffnet. Nach einem Polaritätswechsel der Betriebsspannung wird die Übertragungsanlage zweckmässig mit einer niedrigeren Betriebsspannung betrieben, die dem bei dieser Polarität herrschenden niedrigeren Schutzniveau angepasst ist. Nachdem die Kapazitäten der Kabelisolation in ausreichendem Masse, beispielsweise nach 0,5 bis 4 Stunden, umgeladen sind, wird der Schalter S11 geöffnet und der Schalter S12 geschlossen, wonach die Betriebsspannung auf den vollen Wert erhöht wird. Die Übertragungsanlage arbeitet nun wie vor dem Polaritätswechsel mit einem höheren Schutzniveau für die Polarität der Betriebsspannung und mit einem niedrigeren Schutzniveau für die entgegengesetzte Polarität.

Die Ableiterschaltung nach Figur 3 kann für dieselbe Arbeitsweise verwendet werden, wenn man gemäss Figur 5 eine weitere Diode D12 und zwei Schalter S13 und S14 einfügt.

Wie aus Figur 2 hervorgeht, erhält man bei einer Übertragungsanlage nach der Erfindung die maximale Feldstärke bei einer Transiente mit derselben Polarität wie die Betriebsspannung und bei kaltem Kabel. Diese Feldstärkebeanspruchung kann dadurch herabgesetzt werden, dass man bei Inbetriebnahme der Übertragungsanlage (kaltes Kabel) zunächst nur mit reduzierter Spannung und reduziertem Schutzniveau für die genannten Transienten (z.B. durch Kurzschluss eines Teils der Ventilableiter arbeitet. Auf diese Weise kann die maximale Feldstärke bei kaltem Kabel und beim Auftritt von Transienten mit der Polarität der Betriebsspannung soweit herabgesetzt werden, dass sie die Feldstärkebeanspruchung nicht übersteigt, die bei den übrigen Betriebsfällen auftreten kann. Sobald das Kabel nach der Inbetriebnahme ausreichend erwärmt ist, können die Betriebsspannung und das Schutzniveau auf ihre vollen Werte erhöht werden.

Dadurch, dass das Schutzniveau gegen Spannungen mit zur Betriebsspannung entgegengesetzter Polarität nicht Null ist, sondern einen endlichen und nicht allzu kleinen Wert hat, erzielt man erhebliche Vorteile. Einerseits kann die Spannung bei auftretenden Fehlern ohne Umschaltung des Ableiterschutzes kurzzeitig umgekehrt werden. Hierdurch können Kurzschlussströme schneller gesenkt und eine zuverlässigere Löschung eventueller Lichtbögen erreicht werden. Andererseits kann die Leistungsrichtung der Übertragung kurzzeitig umgekehrt werden, was in gewissen Situationen bedeutende Vorteile mit sich bringt.

Um die vorstehend beschriebenen Vorteile der Erfindung zu erzielen, hat es sich als zweckmässig erwiesen, dass das Verhältnis zwischen der Grösse des niedrigeren und der Grösse des höheren der beiden Begrenzungsniveaus innerhalb eines bevorzugten Bereiches liegt. Dieses Verhältnis soll im Bereich von mindestens 0,2 bis höchstens 0,8 liegen. In diesem Bereich erzielt man im höchstmöglichen Masse die vorstehend genannten Vorteile der Erfindung.

Die oben beschriebenen Ausführungsformen der spannungsbegrenzenden Begrenzungsanordnungen (A1 und A2 in Figur 1) stellen nur Beispiele dar; im Rahmen der Erfindung sind viele andere Ausführungsformen denkbar.

Die in Figur 1 gezeigte Übertragungsanlage ist im wesentlichen für eine Leistungsübertragung in gleichbleibender Richtung vorgesehen. Dadurch, dass die spannungsbegrenzenden Anordnungen umschaltbar (z.B. nach Fig. 4 und Fig. 5) ausgebildet werden, kann die Übertragung in beiden Richtungen durchgeführt werden, d.h. es kann die volle Leistung in beiden Richtungen übertragen werden. Eine Änderung der Leistungsrichtung erfolgt dann durch Polaritätswechsel der Betriebsspannung $U_D$. Eine andere Art, die Möglichkeit einer Leistungsübertragung in beiden Richtungen zu erzielen, besteht darin, bei gleichbleibender Polarität der Betriebsspannung eine Änderung der Stromrichtung zu ermöglichen. Dies kann dadurch geschehen, dass die Stromrichter SR1 und SR2 mit Polwendern versehen werden oder dass jeder der Stromrichter als Doppelstromrichter ausgebildet wird.

Bei der in Figur 1 gezeigten Übertragungsanlage ist die Betriebsspannung normalerweise positiv gegenüber Erde.

Alternativ kann die Übertragungsanlage auch so aufgebaut sein, dass die normale Betriebsspannung negativ gegenüber Erde ist.

Bei der Ausführung nach Figur 4 können die Diodenventile D11, D12 mit den Schaltern S11, S12 durch eine einzige, mit Polwender versehene Diodenschaltung ersetzt werden. Dasselbe gilt für Figur 5.

## Patentansprüche

1. Hochspannungs-Gleichstrom-Übertragungsanlage mit einer gleichstromführenden Leitung (L1, K, L2), wobei die Übertragungsanlage spannungsbegrenzende Anordnungen (A1, A2) zur Begrenzung der Leitungsspannung ($U_D$) auf ein vorgegebenes Begrenzungsniveau enthält, dadurch gekennzeichnet, dass die spannungsbegrenzenden Anordnungen (A1, A2) so angeordnet sind, dass das Begrenzungsniveau für Spannungen der einen Polarität grösser ist als für Spannungen der anderen Polarität und dass das Begrenzungsniveau für die beiden Polaritäten von Null verschieden ist.

2. Hochspannungs-Gleichstrom-Übertragungs-

anlage nach Anspruch 1, bei der die Gleichspannung ($U_D$) bei Normalbetrieb eine gegebene Polarität hat, dadurch gekennzeichnet, dass die spannungsbegrenzenden Anordnungen (A1, A2) ein höheres Begrenzungsniveau für die Spannung der gegebenen Polarität als für eine Spannung entgegengesetzter Polarität haben.

3. Hochspannungs-Gleichstrom-Übertragungsanlage nach Anspruch 2, die dafür vorgesehen ist, bei Normalbetrieb mit beiden möglichen Polaritäten der Gleichspannung zu arbeiten, dadurch gekennzeichnet, dass die spannungsbegrenzenden Anordnungen (A1, A2) mit Umschaltgliedern (z.B. S11, S12) versehen sind, die eine solche Umschaltung der spannungsbegrenzenden Anordnungen erlauben, dass das höhere Begrenzungsniveau für diejenige Polarität herrscht, bei der die Übertragung gerade im Normalbetrieb arbeitet.

4. Hochspannungs-Gleichstrom-Übertragungsanlage nach einem der vorhergehenden Ansprüche, bei der die Leitung ein Gleichstromkabel (K) enthält, dadurch gekennzeichnet, dass je eine spannungsbegrenzende Anordnung an jedem der beiden Enden des Gleichstromkabels (K) angeordnet ist.

5. Hochspannungs-Gleichstrom-Übertragungsanlage nach einem der vorhergehenden Ansprüche, dadurch gekennzeichnet, dass die spannungsbegrenzenden Anordnungen zwei miteinander in Reihe geschaltete Begrenzungsglieder (z.B. A11, A12) enthalten und dass parallel zu dem einen Begrenzungsglied ein Ventilelement (D11) liegt, das die Spannung einer Polarität sperrt und die Sapnnung der anderen Polarität durchlässt.

6. Hochspannungs-Gleichstrom-Übertragungsanlage nach einem der Ansprüche 1 bis 4, dadurch gekennzeichnet, dass die spannungsbegrenzenden Anordnungen zwei zueinander parallelgeschaltete Begrenzungsglieder (z.B. A13, A14) enthalten, dass das eine dieser Begrenzungsglieder ein höheres Begrenzungsniveau als das andere hat und dass in Reihe mit dem Begrenzungsglied mit dem niedrigeren Begrenzungsniveau (A14) ein Ventilelement (D11) liegt, das die Spannung einer Polarität sperrt und die Spannung der anderen Polarität durchlässt.

7. Hochspannungs-Gleichstrom-Übertragungsanlage nach einem der vorhergehenden Ansprüche, dadurch gekennzeichnet, dass das Verhältnis des Wertes des niedrigeren Begrenzungsniveaus zum Wert des höheren Begrenzungsniveaus zwischen mindestens 0,2 und höchstens 0,8 liegt.

**Revendications**

1. Installation pour le transport d'un courant continu à haute tension, comportant une ligne (L1, K, L2), véhiculant un courant continu, ladite installation de transport comportant des dispositifs (A1, A2) de limitation de la tension, servant à limiter la tension ($U_B$) de la ligne à un niveau prédéterminé de limitation, caractérisée par le fait que les dispositifs (A1, A2) de limitation de la tension sont disposés de telle manière que le niveau de limitation pour les tensions présentant une polarité est supérieur au niveau de limitation pour des tensions présentant l'autre polarité et que le niveau de limitation pour les deux polarités est différent de zéro.

2. Installation pour le transport d'un courant continu à haute tension suivant la revendication 1, dans laquelle la tension continue ($U_B$) possède une polarité donnée dans le cas du fonctionnement normal, caractérisée par le fait que les dispositifs (A1, A2) de limitation de la tension possèdent un niveau de limitation plus élevé pour la tension possédant la polarité donnée, que pour une tension possédant la polarité opposée.

3. Installation pour le transport d'un courant continu à haute tension selon la revendication 2, qui est prévue pour opérer, dans le cas du fonctionnement normal, avec les deux polarités possibles, de la tension continue, caractérisée par le fait que les dispositifs (A1, A2) de limitation de la tension sont munis d'organes de commutation (par exemple S11, S12), qui permettent une commutation telle des dispositifs de limitation de la tension que le niveau supérieur de limitation existe pour la polarité pour laquelle l'installation de transport opère précisément dans le fonctionnement normal.

4. Installation pour le transport d'un courant continu à haute tension suivant l'une des revendications précédentes, dans laquelle la ligne comporte un câble à courant continu (K), caractérisée par le fait que respectivement un dispositif de limitation de la tension est raccordé à chacune desdites extrémitée du câble à courant continu (K).

5. Installation pour le transport d'un courant continu à haute tension suivant l'une des revendications précédentes, caractérisée par le fait que les dispositifs de limitation de la tension comportent deux organes de limitation (par exemple A11, A12) branchés en série et qu'en parallèle avec l'un des organes de limitation est disposé un élément redresseur (D11) qui bloque la tension possédant une polarité et laisse passer la tension possédant l'autre polarité.

6. Installation pour le transport de courant continu à haute tension suivant l'une des revendications 1 à 4, caractérisée par le fait que les dispositifs de limitation de la tension comportent deux organes de limitation (par exempel A13, A14) branchés en parallèle, que l'un de ces organes de limitation possède un niveau de limitation supérieur à celui de l'autre organe et qu'en série avec l'organe de limitation possédant le niveau le plus faible de limitation (A14) est situé un élément redresseur (D11) qui bloque la tension possédant une polarité et laisse passer la tension possédant l'autre polarité.

7. Installation pour le transport d'un courant continu à haute tension suivant l'une des revendications précédentes, caractérisée par le fait que le rapport de la valeur du niveau de limitation le plus faible à la valeur du niveau de limitation le plus élevé est compris entre au moins 0,2 et au plus 0,8.

**Claims**

1. High voltage direct current transmission system with a line (L1, K, L2) for conducting direct current, which transmission includes voltage-limiting components (A1, A2) for limiting the line voltage $U_D$ to a predetermined limiting level, characterized in that the voltage-limiting components (A1, A2) are arranged such that the limiting level is higher for voltages of one polarity than for voltages of the other polarity, and that the limiting level is different from zero for both polarities.

2. High voltage direct current transmission system according to claim 1, in which during normal operation the direct voltage ($U_D$) has a given polarity, characterized in that the voltage-limiting components (A1, A2) have a higher limiting level for the voltage of said given polarity than for the voltage of the opposite polarity.

3. High voltage direct current transmission system according to claim 2, which is arranged to operate with either of the two possible polarities of the direct voltage during normal operation, characterized in that the voltage-limiting components (A1, A2) are provided with switching means (e.g. S11, S12) permitting such a change-over of the voltage-limiting components that the higher limiting level prevails for that polarity at which the transmission system is operating under normal operating conditions.

4. High voltage direct current transmission system according to any of the preceding claims, in which the line comprises a direct current cable (K), characterized in that a voltage-limiting component is provided at each of the two ends of the direct current cable (K).

5. High voltage direct current transmission system according to any of the preceding claims. characterized in that the voltage-limiting components comprise two series-connected limiting elements (e.g. A11, A12), and that a valve element (D11) is connected in parallel to one of said limiting elements said valve element blocking the voltage of one polarity and letting through the voltage of the other polarity.

6. High voltage direct current transmission system according to any of claim 1 to 4, characterized in that the voltage-limiting components include two limiting members (e.g. A13, A14) connected in parallel to each other, that one of said limiting elements has a higher limiting level than the other, and that the limiting element with the lower limiting level (A14) is connected in series with a valve element (D11), which blocks the voltage of one polarity and lets through the voltage of the other polarity.

7. High voltage direct current transmission system according to any of the preceding claims, characterized in that the ratio of the value of the lower limiting level to the value of the higher limiting level is at least 0,2 and at most 0,8.

FIG. 1

FIG.2

FIG. 3

FIG.4

FIG. 5